# EUROPÄISCHE PATENTSCHRIFT

(11) **EP 1 327 472 B1**
(45) Veröffentlichungstag und Bekanntmachung des Hinweises auf die Patenterteilung: **20.09.2006**
(21) Anmeldenummer: 02026634.2
(22) Anmeldetag: 29.11.2002
(51) Int. Cl.: B01D 46/12, F04B 39/16

(54) **Filterelement zur Entölung eines Gasstroms**
Filter element for removing oil from a gas stream
Elément de filtration pour deshuiler un flux de gaz

(30) Priorität: 10.01.2002 DE 10200635
(43) Veröffentlichungstag der Anmeldung: 16.07.2003
(73) Patentinhaber: Mann + Hummel GmbH, 71638 Ludwigsburg (DE)
(72) Erfinder: Heikamp, Wolfgang, 67165 Waldsee (DE)
(74) Vertreter: Voth, Gerhard

(56) Entgegenhaltungen:
- WO-A-00/62900
- WO-A-88/10146
- DE-A- 3 810 779
- US-A- 6 030 428

## Beschreibung

### Stand der Technik

Die Erfindung betrifft ein Filterelement, insbesondere zur Entölung eines Gasstroms, nach dem Oberbegriff des Anspruchs 1.

Es ist ein Filterelement beispielsweise aus der DE 94 03 868.6 U1 mit einer Filterbahn bekannt, die einen Hohlzylinder bildet, der radial von außen von der zu filternden Flüssigkeit angeströmt wird und dann die gefilterte Flüssigkeit zentral aus dem Filterelement herausgeleitet wird. Das Material der Filterbahn ist bei dem bekannten Filterelement Papier, Filz oder ein Kunststoffvlies, wobei diese Filterelemente als auswechselbarer Einsatz in ein entsprechendes Filtergehäuse eingefügt werden.

Bei einer solchen Anordnung, die beispielsweise zum Luftentölen in Kompressoren oder Vakuumpumpen eingesetzt wird spielen aufgrund der relativ hohen mechanischen Belastung die Eigenschaften der Filterlagen eine große Rolle.

Aus der US 6 030 428 ist ein Membransystem aus PTFE (Polytetrafluorethylene) bekannt, wobei abwechselnd eine PTFE- Membran und ein Vlies angeordnet ist. Dieser Aufbau ist zum Filtrieren von Luft geeignet und soll eine geringe Druckdifferenz bewirken.

### Aufgabenstellung

Der Erfindung liegt die Aufgabe zugrunde, ein Filterelement der eingangs genannten Art so fortzubilden, dass bei einer großen Belastbarkeit des Filterelements ein möglichst geringer Bauraum notwendig ist.

### Vorteile der Erfindung

Das erfindungsgemäße Filterelement ist mit den Merkmalen des Kennzeichens des Anspruchs 1 dadurch vorteilhaft, dass bei im Gasstrom angeordneten Filtermatten, an den Partikel im Gasstrom haften und abgeleitet werden können, die Filtermatten aus mehreren Lagen eines Filtermaterials mit einer dazwischen angeordneten Membran bestehen, wobei die Filtermatten beiderseits der Membran aus jeweils bis 20, insbesondere 5 bis 10, einzelnen Lagen eines günstigen Filtermaterials bestehen. Somit kann eventuell zusätzlich anströmseitig mit einem Vorabscheidevlies und/oder abströmseitig mit einem Nachabscheidevlies versehen sind, der Bauraum des Filterelements in vorteilhafter Weise klein gehalten werden. Als Filtermaterial der Lagen der Filtermatten kommt hier insbesondere Glasfaserpapier, Kunststofffaservlies oder Filz in Frage.

Gemäß der Erfindung sind die Filtermatten holzylindrisch an einem perforierten, bevorzugt metallischen Mittelrohr gehalten, sodass der zu filternde Gasstrom radial von außen anströmt und axial aus dem Filterelement führbar ist.

Das erfindungsgemäße Filterelement ist in vorteilhafter Weise zur Entölung eines Luftstrom in Kompressoren oder Vakuumpumpen einsetzbar. Hierdurch kann der Bauraum auf ca. zwei Drittel des Bauraumes herkömmlicher Filterelemente verkleinert werden mit einer gleichzeitigen Senkung des Druckverlustes um bis zu 20%. Ein Standzeitbeeinträchtigung ist hier darüber hinaus nicht zu erwarten.

### Zeichnung

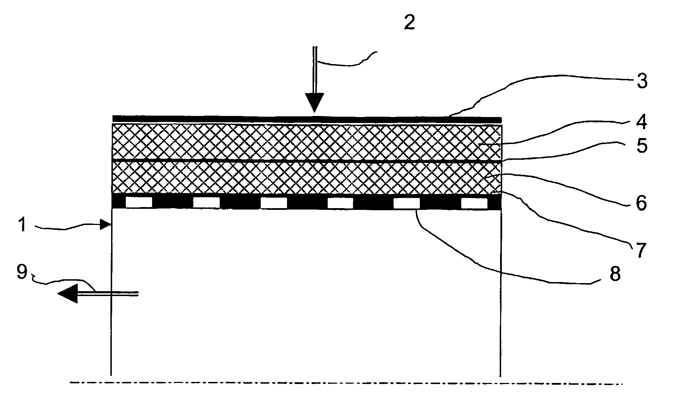

Ein Ausführungsbeispiel des erfindungsgemäßen Filterelements wird anhand der Zeichnung erläutert, wobei die einzige Figur einen Schnitt durch Filtermatten eines hohlzylindrischen Filterelements zeigt.

### Beschreibung des Ausführungsbeispiels

In der Figur ist ein Filterelement 1 gezeigt, welches beispielsweise für die Luftentölung eines Kompressors oder einer Vakuumpumpe verwendet wird. Die Luft gelangt gemäß Pfeil 2 an ein Vorabscheidevlies 3 und strömt dann durch ein Filtermatte 4 aus beispielsweise 5 Lagen eines Glasfaserpapiers durch eine Membran 5 und dann durch eine weitere Filtermatte 6 aus ebenfalls 5 Lagen eines Glasfaserpapiers.

Weiterhin ist noch ein Nachabscheidevlies 7 vorhanden. Diese gesamte Anordnung ist auf einem, in der Regel metallischen Mittlerohr 8 gehalten. Die entölte Luft kann dann gemäß Pfeil 9 aus dem Filterelement 1 herausströmen.

## Patentansprüche

1. Filterelement zur Filtrierung eines Gasstroms mit
- im Gasstrom angeordneten Filtermatten (4,6), an den Partikel im Gasstrom (2,9) haften und abgeleitet werden können, **dadurch gekennzeichnet, dass**
- die Filtermatten (4,6) aus mehreren Lagen eines Filtermaterials mit einer dazwischen angeordneten Membran (5) bestehen, wobei die Filtermatten (4,6) beiderseits der Membran (5) aus jeweils bis 20 einzelnen Lagen aus Glasfaserpapier oder Kunststofffaservlies oder Filz bestehen, wobei die Filtermatten (4,6) zusätzlich anströmseitig mit einem Vorabscheidervlies (3) und abströmseitig mit einem Nachabscheidevlies (7) versehen sind und die Filtermatten (4,6) hohlzylindrisch an einem perforierten Mittelrohr (8) gehalten sind, so dass der zu filternde Gasstrom (2,9) radial von außen anströmt und axial aus dem Filterelement (1) führbar ist.

## Claims

1. Filter element for filtering a gas flow, said filter element having
- filter mats (4, 6) that are disposed in the gas flow, particles in the gas flow (2, 9) adhering to the said filter mats and being able to be diverted, **characterised in that**
- the filter mats (4, 6) comprise a plurality of layers of a filtering material with a diaphragm (5) disposed between the said layers, wherein the filter mats (4, 6) on both sides of the diaphragm (5) each comprise up to 20 individual layers of glass fibre paper or plastics material non-woven fabric or felt, wherein the filter mats (4, 6) are provided in addition on the incoming side with a preliminary separating non-woven fabric (3) and on the outgoing side with a post separating non-woven fabric (7) and the filter mats (4, 6) are retained at a perforated central tube (8) in a cylindrically hollow manner such that the gas flow (2, 9) to be filtered flows in radially from outside and is guidable axially out of the filter element (1).

## Revendications

1. Elément filtrant pour filtrer un flux de gaz, comprenant des nattes filtrantes (4, 6) disposées dans le flux de gaz, auxquelles des particules du flux de gaz (2, 9) peuvent adhérer et dont elles peuvent en être évacuées,
**caractérisé en ce que**
les nattes filtrantes (4, 6) sont composées de plusieurs couches d'un matériau filtrant avec une membrane (5) intercalée, les nattes filtrantes (4, 6) présentant des deux côtés de la membrane (5) respectivement jusqu'à 20 couches individuelles de papier en fibres de verre ou d'un non-tissé en matière plastique ou de feutre, les nattes filtrantes (4, 6) étant munies côté amont d'un non-tissé de préséparation (3) et côté aval d'un non-tissé de postséparation (7) et supplémentaires, et les nattes filtrantes (4, 6) cylindriques creuses sont maintenues sur un tube central perforé (8) de sorte que le flux de gaz (2, 9) à filtrer arrive radialement de l'extérieur et peut sortir axialement de l'élément filtrant (1).
